# EUROPÄISCHE PATENTANMELDUNG

(11) **EP 3 176 567 A1**
(43) Veröffentlichungstag der Anmeldung: **07.06.2017**
(21) Anmeldenummer: 16197130.4
(22) Anmeldetag: 03.11.2016
(51) Int. Cl.: G01N 22/04, A24C 5/34

(54) **ANORDNUNG, MASCHINE, VERFAHREN UND VERWENDUNG ZUM ÜBERPRÜFEN EINER ZIGARETTENKOPFQUALITÄT**

(30) Priorität: 16.11.2015 DE 102015119722
(71) Anmelder: Hauni Maschinenbau GmbH, 21033 Hamburg (DE)
(72) Erfinder: JUNGE, Christian, 21039 Escheburg (DE); BARON, Denis, 22457 Hamburg (DE); GRÄFE, Oliver, 22303 Hamburg (DE)
(74) Vertreter: Seemann & Partner Patentanwälte mbB

(57) **Zusammenfassung**

Die Erfindung betrifft eine Anordnung, eine Maschine, ein Verfahren und eine Verwendung zum Überprüfen einer Zigarettenkopfqualität an queraxial geförderten Zigaretten mit wenigstens einer Fördervorrichtung zum queraxialen Fördern von Zigaretten (5) entlang eines Förderwegs (10).

Die erfindungsgemäße Anordnung umfasst wenigstens eine Mikrowellenmessvorrichtung (20), die wenigstens einen Mikrowellenresonator umfasst, der als Reflexionsresonator (21) mit einem längserstreckten Resonatorhohlraum (24), insbesondere mit rechteckigem Querschnitt, ausgebildet ist, der quer zu seiner Längserstreckung von einem Durchtrittskanal (40) durchsetzt ist, durch den der Förderweg (10) verläuft, wobei der Reflexionsresonator (21) an in Bezug auf den Durchtrittskanal (40) zueinander gegenüberliegenden Seiten einerseits eine Mikrowelleneinkopplung aufweist und andererseits von einer Reflexionsfläche (32) begrenzt ist, die parallel zum Durchtrittskanal (40) angeordnet ist.

## Beschreibung

Die Erfindung betrifft eine Anordnung zum Überprüfen einer Zigarettenkopfqualität an queraxial geförderten Zigaretten mit wenigstens einer Fördervorrichtung zum queraxialen Fördern von Zigaretten entlang eines Förderwegs. Die Erfindung betrifft ferner eine entsprechende Maschine der Tabak verarbeitenden Industrie, ein Verfahren und eine Verwendung.

Im Produktionsprozess einer Zigarettenherstellmaschine wird in einigen Fällen im Filteransetzer die Tabakfülldichte bzw. Zigarettenkopfdichte am Brandende der fertig hergestellten Zigarette bestimmt. Zigaretten mit schlechter Kopfqualität, in diesem Fall unzureichender Füllung des Zigarettenkopfs, werden ausgeschleust. Eine hohe Fülldichte am Zigarettenkopf ist wünschenswert, damit der Tabak im Zigarettenkopf stärker verdichtet ist und so wie ein Pfropfen wirkt, der das Herausfallen von Tabak aus dem Umhüllungspapier verhindert. Die Kopfqualität ist somit bei der weiteren Produktion und bei der Verpackung der Zigaretten ebenso wie für den Endverbraucher wichtig, der bei guter Kopfqualität einen subjektiven Eindruck einer gut gefüllten Zigarette erhält.

Bislang wird die Kopfqualität mit einem optischen Sensor gemessen, der Abweichungen von einer mittleren Qualität detektieren kann. Ein solcher Mittelwert ist meistens ein gleitender Mittelwert. Der Sensor überwacht die Streuung von Licht im Bereich des Zigarettenkopfes. Dabei wird der Effekt ausgenutzt, dass die Menge des gestreuten Lichts von der Menge des Tabaks im Zigarettenkopf abhängt. Ein solcher Sensor ist seit Jahren unter der Bezeichnung "LooseEndScanner" (LES) in Zigarettenherstellmaschinen der Anmelderin im Einsatz.

Diese bekannte Messmethode ist recht genau, hat aber ihre Grenzen. So ist es nicht möglich, eine neutrale und absolute Bewertung des Zigarettenkopfes durchzuführen, da viele Einflussfaktoren die absoluten Messsignale verändern. Solche Faktoren sind u. a. die Faserlänge des Tabaks, die Nahtlage an der Zigarette und der Abstand des Produkts zum Sensor. Die Ausschlusskriterien müssen für jeden Sensor und jede Maschine individuell eingestellt werden. Die Messung ist selbstreferentiell, da sie weder im Labor noch über verschiedene Maschinen hinweg vergleichbar bzw. reproduzierbar ist. Auch im Falle der Verwendung dunklen oder schwarzen Zigarettenpapiers stößt das Verfahren an seine Grenzen.

Diesem Stand der Technik gegenüber liegt der vorliegenden Erfindung die Aufgabe zugrunde, die Überprüfung einer Kopfqualität einschließlich einer Zigarettenkopfdichte zu verbessern.

Die Aufgabe wird gelöst durch eine Anordnung zum Überprüfen einer Zigarettenkopfqualität an queraxial geförderten Zigaretten mit wenigstens einer Fördervorrichtung zum queraxialen Fördern von Zigaretten entlang eines Förderwegs, umfassend wenigstens eine Mikrowellenmessvorrichtung, die wenigstens einen Mikrowellenresonator umfasst, der als Reflexionsresonator mit einem längserstreckten Resonatorhohlraum, insbesondere mit rechteckigem Querschnitt, ausgebildet ist, der quer zu seiner Längserstreckung von einem Durchtrittskanal durchsetzt ist, durch den der Förderweg verläuft, wobei der Reflexionsresonator an in Bezug auf den Durchtrittskanal zueinander gegenüberliegenden Seiten einerseits eine Mikrowelleneinkopplung aufweist und andererseits von einer Reflexionsfläche begrenzt ist, die parallel zum Durchtrittskanal angeordnet ist.

Mit der erfindungsgemäßen Anordnung wird nunmehr erstmals eine Mikrowellenmessung der Zigarettenkopfqualität ermöglicht. Diese hat gegenüber der optischen Messung den Vorteil, von der Farbe des Zigarettenpapiers unabhängig zu sein, da das Papier für das Mikrowellenmessfeld im Wesentlichen durchlässig ist und nur einen geringen Beitrag zum Messsignal liefert.

Die Verwendung eines Reflexionsresonators zur Überprüfung der Zigarettenkopfqualität gemäß der vorliegenden Erfindung hat den Vorteil, dass eine hohe Güte Q bzw. ein geringer Verlustfaktor insbesondere bei leerem Resonatorhohlraum erreicht wird und durch die Verwendung nur einer einzelnen Antenne zum Einkoppeln und Auskoppeln von Mikrowellen der Bauraum für die Mikrowellenvorrichtung klein sein kann. Die hohe Güte Q ermöglicht außerdem eine sehr feine und trennscharfe Analyse des Zigarettenkopfes hinsichtlich seiner Dichte und Masse sowie die Unterscheidung, ob der Zigarettenkopf ausreichend gefüllt ist oder nicht. Eine derart hohe Präzision war mit bekannten Systemen, gerade mit optischen Systemen, noch nicht erreichbar. Außerdem kann nunmehr die tatsächlich vorhandene Tabakmasse in Milligramm im Zigarettenkopf ermittelt werden, was eine absolute Messung darstellt und eine Vergleichbarkeit einer Zigarettenkopfqualität über Zigaretten von verschiedene Maschinen und Herstellern hinweg bietet.

Unter dem Begriff "Zigarettenkopfqualität", die erfindungsgemäß geprüft wird, kann neben der Zigarettenkopfdichte und/oder -masse auch die Dichte oder das Vorhandensein anderer Materialien im Zigarettenkopf geprüft werden, beispielsweise im Sinne von sogenannten "Reduced Risk Products" oder sogenannten "Heat Not Burn"-Produkten, die beispielsweise Hitzequellen ("heat sources") oder ähnliches aufweisen können.

Die erfindungsgemäße Anordnung kann in einer Maschine der Tabak verarbeitenden Industrie als letzte Messstelle vor dem Verpacken von fertigen Filterzigaretten vorgesehen sein. Hierfür bietet sich beispielsweise eine Abgabetrommel einer Filteransetzmaschine oder auch der Eingangsbereich einer Packmaschine an.

Der Resonatorhohlraum weist erfindungsgemäß einen Durchtrittskanal für die Zigaretten oder, genauer, für den Brandendenabschnit einer Zigarette, auf. Hierdurch wird der Resonatorhohlraum in mehrere Resonatorhohlraumabschnitte aufgeteilt. Solche Resonatorhohlraumabschnitte sind Teilräume des Resonatorhohlraums, die miteinander fluchten und zusammen den Resonatorhohlraum bilden. Der gesamte Resonatorhohlraum ist somit in im wesentlichen drei Abschnitte aufgeteilt, zwei Resonatorhohlraumabschnitte, die abseits des Durchtrittskanals innerhalb eines Gehäuses des Resonators liegen, und den mit den beiden anderen Resonatorhohlraumabschnitten fluchtenden Bereich des Durchtrittskanals, in dem ein Mikrowellenmessfeld sich zwischen den beiden Resonatorhohlraumabschnitten fortpflanzt. Dieser Bereich des Durchtrittskanals kann daher im Rahmen der vorliegenden erfindungsgemäßen Mikrowellenmessvorrichtung als eigener Resonatorhohlraumabschnitt angesehen werden.

Der erste Resonatorhohlraumabschnitt, der an den Durchtrittskanal angrenzt und eine Einkoppelantenne aufweist, wird nachfolgend auch als Mikrowelleneinkopplungshohlraum oder kurz Einkopplungskammer bezeichnet. Der gegenüberliegende zweite Resonatorhohlraumabschnitt, der mit der Reflexionsfläche endet, wird nachfolgend als Reflexionskammer bezeichnet. Dies ist unabhängig davon, ob der Einkopplungshohlraum und/oder die Reflexionskammer vom Durchtrittskanal mittels Schutzblenden vor Schmutz aus dem Durchtrittskanal abgedichtet ist oder sind.

Vorzugsweise sind Teile des Resonatorhohlraums, die nicht vom Durchtrittskanal durchsetzt sind, vom Durchtrittskanal mittels für Mikrowellen durchlässige Schutzblenden abgetrennt. Dies gilt nicht für den Durchtrittskanal und den darin definierten dritten Resonatorhohlraumabschnitt selbst. Die Schutzblenden können beispielsweise als Schutzfolien, beispielsweise Kunststofffolien oder Kunststoffplatten, ausgebildet sein. Die Abschnitte des Resonatorhohlraums sind, insbesondere mittels der Schutzblenden, vorzugsweise vollständig voneinander getrennt. Da sowohl der Durchtrittskanal als auch die Schutzblenden für das Mikrowellenmessfeld durchlässig sind, bilden die beiden Teile des Resonatorhohlraums zusammen mit dem damit fluchtenden Teil des Durchtrittskanals einen gemeinsamen Resonator für das Mikrowellenmessfeld.

Vorteilhafterweise ist der Durchtrittskanal als Gabel oder im Querschnitt "U"-förmig ausgebildet und ragen Wandungen des Durchtrittskanals in wenigstens einer Richtung über den Resonatorhohlraum hinaus. Ein als Gabel oder im Querschnitt "U"-förmig ausgebildeter Durchtrittskanal bzw. ein Durchtrittskanal mit über den Resonatorhohlraum hinausragenden Wandungen hat den Vorteil, dass durch den seitlichen Abschluss das Austreten des Mikrowellenmessfelds aus dem Mikrowellenresonator klein gehalten wird.

Die Mikrowellenmessvorrichtung weist vorzugsweise eine kapazitive oder induktive Mikrowelleneinkopplung auf. Diese umfasst vorzugsweise eine Antenne und einen Mikrowelleneinkopplungshohlraum, im Nachfolgenden auch Einkopplungskammer genannt.

Der Mikrowellenresonator umfasst vorzugsweise ein Einkopplungselement zwischen der Mikrowelleneinkopplung und/oder einer an die Reflexionsfläche angrenzende Reflexionskammer einerseits und dem Resonatorhohlraum umfasst, wobei das Einkopplungselement als Blende, die wenigstens eine, insbesondere ovale, runde oder polygonale, Öffnung aufweist, ausgebildet ist. Unter den Begriff "ovale Öffnung" fallen in diesem Zusammenhang auch elliptische Formen, Rechtecke mit abgerundeten Ecken oder angesetzten Halbkreisen oder Halbellipsen unter anderem. Die Reflexionskammer ist, wie oben definiert, ein Teil des Resonatorhohlraums, kann jedoch durch die Blendenöffnung vom zentralen Teil des Resonatorhohlraums teilweise abgetrennt sein.

Die Mikrowelleneinkopplung kann vorteilhafterweise ein, insbesondere einstellbares, Transformationselement zur transformatorischen Einkopplung von Mikrowellen in den Resonatorhohlraum umfassen, also zur Anpassung der Einspeisung an den Resonator. Das Transformationselement, insbesondere vorzugsweise ein Stub-Tuner oder ein Zweischeibentransformator, dient dazu, die eingespeiste Mikrowellenenergie möglichst verlustfrei in den Mikrowellenresonator, oder genauer, in den Resonatorhohlraum einzuspeisen. Stub-Tuner und Zweischeibentransformatoren bieten darüber hinaus die Möglichkeit der Einstellbarkeit.

Der Resonatorhohlraum hat vorteilhafterweise die Form eines Hohlleiters, der durch die Reflektionsfläche abgeschlossen ist. Seine Längserstreckung ist vorzugsweise größer als seine Ausdehnung in Querrichtung, welche einerseits die Richtung der Längserstreckung der queraxial geförderten Zigaretten umfasst und andererseits ihren Förderweg. Es bildet sich im Resonator eine stehende Welle aus, die vorzugsweise dort ein Maximum aufweist, wo die Zigaretten auf ihrem Förderweg hindurch treten.

Vorzugsweise ist die wenigstens eine Fördervorrichtung mit Mulden zur Aufnahme und queraxialen Förderung von Zigaretten entlang des Förderwegs ausgebildet, wobei auf dem Förderweg durch den wenigstens einen Durchtrittskanal durch den wenigstens einen Mikrowellenresonator über die jeweiligen Mulden überstehende Zigarettenköpfe der Zigaretten ein Mikrowellenmessfeld im Mikrowellenresonator durchqueren.

Die Quererstreckung des Resonatorhohlraums ist vorzugsweise so zu wählen, dass eine möglichst genaue Fokussierung auf den Zigarettenkopf erfolgt.

Die der Erfindung zugrunde liegende Aufgabe wird auch gelöst durch eine Maschine der Tabak verarbeitenden Industrie, insbesondere Zigarettenherstellmaschine, mit wenigstens einer zuvor beschriebenen erfindungsgemäßen Anordnung, wobei die Anordnung in einem Abschnitt der Maschine angeordnet ist, in der fertige Zigaretten gefördert werden. In dieser Maschine der Tabak verarbeitenden Industrie sind somit die gleichen Merkmale, Eigenschaften und Vorteile realisiert wie in der zuvor beschriebenen erfindungsgemäßen Anordnung.

Vorteilhafterweise ist stromaufwärts und/oder stromabwärts der Mikrowellenmessvorrichtung eine optischer Sensor zur Lageerkennung der Zigaretten vorgesehen und eine Auswertevorrichtung ausgebildet und eingerichtet, Messwerte der Mikrowellenmessvorrichtung anhand der erkannten Lage der Zigaretten in ihren Mulden zu korrigieren oder zu bewerten. Damit können Schwankungen der Mikrowellenmessergebnisse, die aus der Variabilität der relativen Lage der Zigarettenköpfe zum Mikrowellenmessfeld in der Mikrowellenmessvorrichtung resultieren, ausgeglichen werden. Ein optisches Messsystem, das eine solche Lageerkennung erlaubt, ist das von der Anmelderin vertriebene OCIS-System. Dieses kann an der gleichen Trommel im Trommellauf oder an einer Trommel stromabund/oder stromaufwärts zur Mikrowellenmessvorrichtung angeordnet sein.

Weiter wird die der Erfindung zugrunde liegende Aufgabe auch durch ein Verfahren zum Überprüfen einer Zigarettenkopfqualität an entlang eines Förderwegs queraxial geförderten Zigaretten in einer zuvor beschriebenen erfindungsgemäßen Anordnung gelöst, wobei die Zigaretten durch den Durchtrittskanal gefördert werden und dabei mit ihren Zigarettenköpfen ein Mikrowellenmessfeld des als Reflexionsresonator ausgebildeten Mikrowellenresonators durchlaufen. Aufgrund der hohen Güte des als Reflexionsresonator ausgebildeten Mikrowellenresonators ergibt sich eine besonders gute Trennschärfe bei der Analyse und Überprüfung der Zigarettenköpfe.

Vorzugsweise werden wenigstens eine, vorzugsweise wenigstens zwei verschiedene Größen des Mikrowellenmessfelds beim Durchlaufen einer Zigarette erfasst und ausgewertet, insbesondere eine Resonanzfrequenz, eine Güte, ein Reflexionsfaktor und/oder ein Stehwellenverhältnis. Da die Güte des Reflexionsresonators im leeren Zustand besonders hoch ist, reagiert die Güte sehr fein auf Veränderungen aufgrund durchlaufender Zigaretten und insbesondere auf die Zigarettenkopfdichte.

Vorteilhafterweise werden die erfassten Größen des Mikrowellenmessfelds auf eine Zigarettenkopfqualität der Zigaretten hin ausgewertet, wobei zweidimensionale oder mehrdimensionale Messwertbereiche definiert sind oder werden, die für spezifikationskonforme oder nicht spezifikationskonforme Zigaretten stehen. Durch die Verwendung von zwei oder mehreren Größen ist es möglich, die unterschiedlichen Messwertbereiche genauer voneinander zu trennen, auch wenn sie in jeder einzelnen Größe teilweise überlappen. Bei den Messwertbereichen handelt es sich um zwei- oder dreidimensionale Messwertbereiche, die für bestimmte Qualitäts- oder Schadensfälle der Zigarettenköpfe typisch identifiziert werden. Als Variablen können typische bei Mikrowellenmessverfahren aufgenommene Messgrößen verwendet werden. Rein beispielhaft und nicht ausschließlich können dies Resonanzfrequenz, Güte und/oder Stehwellenverhältnis sein. Das Stehwellenverhältnis (SWR, "standing wave ratio") ist ein Maß für die stehende Welle, die in dem Reflexionsresonator durch Reflexion entsteht. Mit den Amplituden der vorlaufenden und der rücklaufenden Wellen ist es als Verhältnis der Summe und der Differenzen der vorlaufenden und rücklaufenden Wellen definiert. Ohne Reflexion ist das SWR gleich 1, bei vollständiger Reflexion unendlich.

Vorteilhafterweise wird eine optische Lageerkennung der Zigaretten stromaufwärts und/oder stromabwärts der Mikrowellenmessung durchgeführt und werden die Messwerte der Mikrowellenmessung anhand einer erkannten Lage der Zigaretten in ihren Mulden korrigiert oder bewertet.

Zigaretten, deren Kopfdichtenmesswerte nicht spezifikationskonform sind, werden vorzugsweise von einer weiteren Verarbeitung und/oder Verpackung ausgeschlossen.

Die der Erfindung zugrunde liegen Aufgabe wird schließlich auch durch eine Verwendung einer Mikrowellenmessvorrichtung in einer zuvor beschriebenen erfindungsgemäßen Anordnung zum Überprüfen einer Zigarettenkopfqualität an queraxial geförderten Zigaretten gelöst.

Die Erfindungsgegenstände, also die Anordnung, die Maschine der Tabak verarbeitenden Industrie, das Verfahren und die Verwendung beziehen sich aufeinander und weisen die gleichen Vorteile, Eigenschaften und Merkmale auf. Hiermit ist es nunmehr möglich, absolute Aussagen über die Zigarettenkopfqualität zu treffen, beispielsweise dadurch, dass die Masse des Tabaks im Zigarettenkopf in Milligramm bestimmt wird. Dieser Wert ist über mehrere Maschinen hinweg und zu Laborwerten vergleichbar. Umstände, die in optischen Systemen Störgrößen darstellen, wie die Struktur des Tabaks oder die Farbe des Umhüllungspapiers, spielen gemäß der Erfindung keine Rolle mehr. Andere Störgrößen, wie verschiedene Papiersorten, Papierklebstellen und/oder beschichtete Papiere, beispielsweise LIP-Papiere, haben nur einen geringen Einfluss. Die erfindungsgemäße Messung ist daher stabiler und weniger fehleranfällig als optische Messmethoden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Zigarette
- Fig. 2: eine schematische Darstellung eines Details einer Tabakstrangherstellung
- Fig. 3: eine schematische Darstellung von Teilen eines Ausführungsbeispiels einer erfindungsgemäßen Anordnung,
- Fig. 4a), b): schematische perspektivische Schnittdarstellungen durch ein Ausführungsbeispiel einer erfindungsgemäßen Mikrowellenmessvorrichtung,
- Fig. 5a), b): schematische Schnittdarstellungen durch ein Ausführungsbeispiel einer erfindungsgemäßen Mikrowellenmessvorrichtung mit Mikrowellenmessfeldern im beladenen Zustand und
- Fig. 6a), b): Beispiele von Analysebereichen in verschiedenen zweidimensionalen Parameterräumen.

In den Zeichnungen sind jeweils gleiche oder gleichartige Elemente und/oder Teile mit denselben Bezugsziffern versehen, so dass von einer erneuten Vorstellung jeweils abgesehen wird.

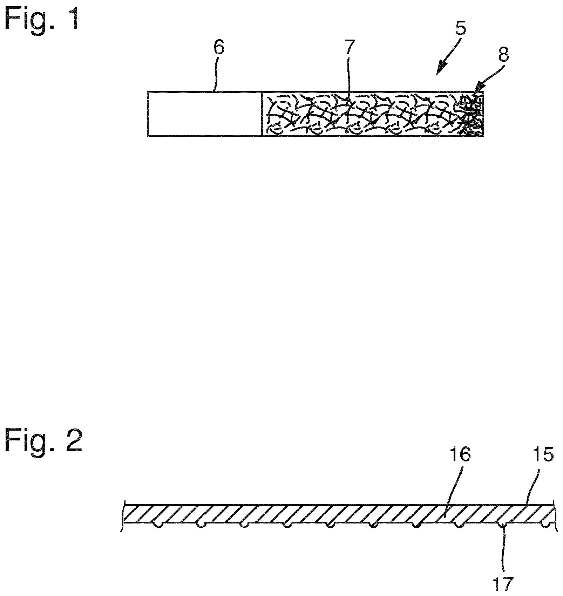

Fig. 1 stellt schematisch eine Zigarette 5 mit ihren Bestandteilen dar. Sie weist einen Filter 6 und einen Tabakstock 7 mit Tabak auf. Der Tabak im Tabakstock 7 ist am Brandende, also dem dem Filter 6 gegenüberliegenden Ende verdichtet. Diese Zigarettenkopffüllung 8 wirkt als Pfropfen und verhindert, dass Tabak aus der Zigarette 5 herausfallen kann. Die Zigarettenkopffüllung 8 vermittelt der Zigarette 5 außerdem einen hochwertigen Eindruck.

In Fig. 2 ist schematisch dargestellt, wie die Zigarettenkopffüllung 8 erzeugt wird. Es handelt sich um ein Detail aus einer Zigarettenstrangmaschine, in der ein Tabakstrang hergestellt wird. An der gezeigten Stelle ist loser Tabak von unten auf einen Saugbandförderer 15 aufgeschauert worden und wird mittels Saugluft als aufgeschauerte Tabakschicht 16 am Saugband gehalten. Nicht dargestellt ist, dass die Tabakschicht 16 anschließend in einer Formatvorrichtung mit einem Umhüllungspapier umwickelt und zu einem Tabakstrang mit rundem Querschnitt geformt wird.

Beim Aufschauern auf das Saugband wird zunächst eine Tabakschicht 16 mit variabler Dicke aufgeschauert, die größer ist als benötigt. Die Tabakschicht 16 durchläuft dann einen Trimmer, der die gewünschte Dicke bzw. Höhe der Tabakschicht 16 und damit die Tabakmenge pro Längeneinheit einstellt. Der Trimmer ist so eingestellt, dass in regelmäßigen Abständen, die einer oder zwei Tabakstocklängen entsprechen, die Höhe der Tabakschicht 16 größer ist als in dazwischen liegenden Abschnitten. Diese Stellen sind als Überschuss 17 in Fig. 2 erkennbar. Bei der anschließenden Strangformung wird der Tabak an diesen Stellen aufgrund der größeren Tabakmasse stärker verdichtet als im Rest des Strangs, so dass diese Stellen anschließend die Zigarettenkopffüllungen 8 bilden. Auch die Schnittebenen, an denen anschließend gegebenenfalls doppelt lange Tabakstöcke vom Tabakstrang geschnitten werden, liegen in den Überschussregionen.

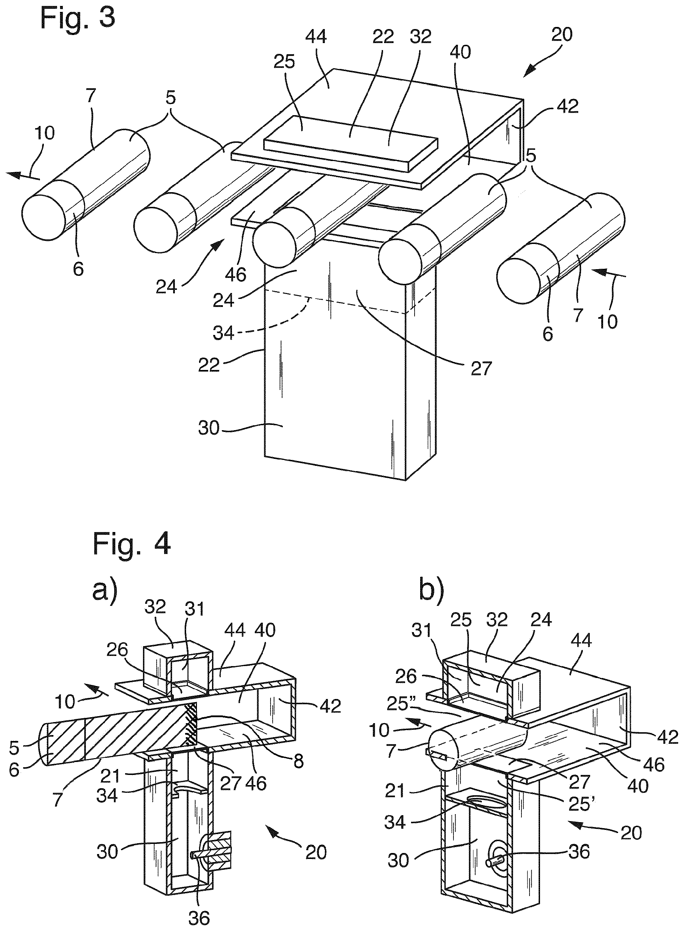

Fig. 3 zeigt eine schematische perspektivische Darstellung von Teilen eines Ausführungsbeispiels einer erfindungsgemäßen Anordnung. Die Anordnung umfasst eine Mikrowellenmessvorrichtung 20 mit einem Gehäuse 22, das einen Reflexionsresonator 24 mit einer Mikrowelleneinkopplung 30 umfasst. Eine Blende 34 ist gestrichelt angedeutet und trennt einen Mikrowelleneinkopplungshohlraum 30 vom Reflexionsresonator 24 ab. Im oberen Bereich ist der Reflexionsresonator durchbrochen von einem Durchtrittskanal 40, der gabelförmig ausgebildet ist. Dieser umfasst eine erste Wandung 44 und eine zweite Wandung 46 und ist mittels einer Abschlusswand 42 seitlich abgeschlossen. Damit ist der Durchtrittskanal 40 im Querschnitt "U"-förmig. Dadurch wird verhindert, dass das Mikrowellenfeld aus dem Inneren des Resonators in größerem Maße austritt. Dazu trägt bei, dass die erste Wandung 44 und die zweite Wandung 46 deutlich über den Resonatorhohlraum hinausragen.

Durch den Durchtrittskanal 40 verläuft ein Förderweg 10 von stabförmigen Artikeln, in diesem Fall Zigaretten 5, die einen Filter 6 sowie einen Tabakstock 7 mit einer vergleichsweise dichten Tabakkopffüllung 8 umfassen. Die Zigaretten 5 ragen teilweise über nicht dargestellte Mulden einer nicht dargestellten Muldenfördervorrichtung hinaus, beispielsweise einem Muldenband, einer Muldentrommel oder einer Muldenkegeltrommel. Entsprechende Muldenfördervorrichtungen sind beispielsweise in der deutschen Patentanmeldung Nr. 10 2013 213 936.5 der Anmelderin offenbart.

Der Resonatorhohlraum selbst ist mittels Schutzblenden 26, 27, die aus einem für Mikrowellen durchlässigen Material bestehen, beispielsweise PEEK (Polyetheretherketon), abgedeckt. Dies verhindert, dass Schmutz in den Mikrowellenresonator eindringt.

Fig. 4a) und 4b) zeigen schematische perspektivische Schnittdarstellungen durch ein Ausführungsbeispiel einer erfindungsgemäßen Mikrowellenmessvorrichtung 20. Die geometrischen Abmessungen sind etwas anders als in Fig. 3. Es handelt sich jeweils um Schnittdarstellungen durch die Mikrowellenmessvorrichtung 20, und zwar in Fig. 4a) um eine Schnittebene, die längs durch die Zigarette 5 verläuft, die mittig auf ihrem Förderweg 10 in dem Durchtrittskanal 40 angeordnet ist, und in Fig. 4b) um eine Schnittebene, die quer zur Längserstreckung der Zigarette 5 verläuft.

Die Mikrowellenmessvorrichtung 20 umfasst mehrere Teile. Die Mikrowellen werden in einer Mikrowelleneinkopplung eingekoppelt, die einen Mikrowelleneinkopplungshohlraum 30 und eine Antenne 36 umfasst, die sowohl als Einkopplungsantenne als auch als Auskopplungsantenne betrieben wird. Hierdurch wird auch Bauraum eingespart. Der Mikrowelleneinkopplungshohlraum 30 wird begrenzt durch eine Wand mit einer kreisförmigen oder ovalen Blende 34, durch die Mikrowellen in den zentralen Resonatorhohlraum 24 eindringen. Die Blendenöffnung kann auch andere Formen haben, oder es sind mehrere Blendenöffnungen möglich, wobei diese beispielsweise entsprechend der einzuspeisenden Mode des Mikrowellenfeldes wählbar sein kann.

Der Resonatorhohlraum 24 ist durch den Durchtrittskanal 40 in zwei separate Teile bzw. Resonatorhohlraumabschnitte 25, 25' geteilt. Die Fortsetzung des Resonatorhohlraums 24 im Durchtrittskanal 40 selbst kann als weiterer Resonatorhohlraumabschnitt 25" angesehen werden. Die Schutzblenden 26, 27, die diese Resonatorhohlraumabschnitte 25, 25' des Resonatorhohlraums 24 vom Durchtrittskanal 40 trennen, sind für Mikrowellen durchlässig, so dass sich ein gemeinsamer Resonatorhohlraum 24 mit zwei bzw. drei Teilen bzw. Teilräumen, den Resonatorhohlraumabschnitten 25, 25', 25" ergibt. Der mittlere Resonatorhohlraumabschnitt 25" ist dabei derjenige, der im Durchtrittskanal 40 liegt, während die beiden anderen durch mikrowellendurchlässige Schutzblenden 26, 27 vor Verschmutzung geschützt sind, so dass eine gleichbleibend hohe Güte des Reflexionsresonators 21 gewährleistet ist.

Der Resonatorhohlraum 24 ist durch eine Reflexionsfläche 32, die der Blende 34 gegenüberliegt, abgeschlossen. Der Hohlraum, der in Längsrichtung des Resonators einerseits von der Reflexionsfläche 32 und andererseits von der Schutzblende 26 eingegrenzt wird, bildet eine so genannte Reflexionskammer 31. Mikrowellen, die durch die Blende 34 in den Resonatorhohlraum 24 gelangen, werden an der Reflexionsfläche 32 reflektiert und gelangen zurück durch die Blende 34 zur Antenne 36. Dabei durchlaufen sie zweifach den Durchtrittskanal 40, der von den Zigarettenköpfen der Zigaretten 5 durchlaufen wird.

In dem in Fig. 4a) und 4b) dargestellten Ausführungsbeispiel ist die Ausdehnung des Resonatorhohlraums 24 im Querschnitt in Längsrichtung des stabförmigen Artikels kleiner als in Querrichtung dazu. Damit wird eine gute Auflösung in der Längserstreckung der Zigaretten 5 erzielt. Dies ist auch in der Form und Anordnung der Schutzblenden 26, 27 erkennbar, die nur den Abschnitt rund um Zigarettenköpfe der Zigaretten 5 überlappen. Es ist auch möglich, die Längen- und Breitenverhältnisse umzukehren, so dass die queraxial geförderte Zigarette 5 auf die Breitseite des Querschnitts des Resonatorhohlraums 24 trifft. Hiermit lässt sich eine gute Ortsauflösung quer zur Längserstreckung der Zigarette 5 erreichen.

Die in Fig. 4a) und 4b) gezeigte Anordnung hat den Vorteil, dass das Mikrowellenmessfeld im Resonatorhohlraum 24 durch die seitlich überragenden Wandungen 44, 46 sowie die Abschlusswand 42 wirksam daran gehindert wird, nach außen auszutreten.

Die Einkopplungsantenne 36 im Mikrowelleneinkopplungshohlraum 30 ist in Fig. 4a) und 4b) seitlich in der langen Seite angeordnet. Die Öffnung der Blende 34 ist in diesem Ausführungsbeispiel elliptisch ausgebildet.

In einer nicht dargestellten Ausführungsform ist eine gleichartige Lochblende auch als Abschluss der Reflexionskammer 31 vorgesehen.

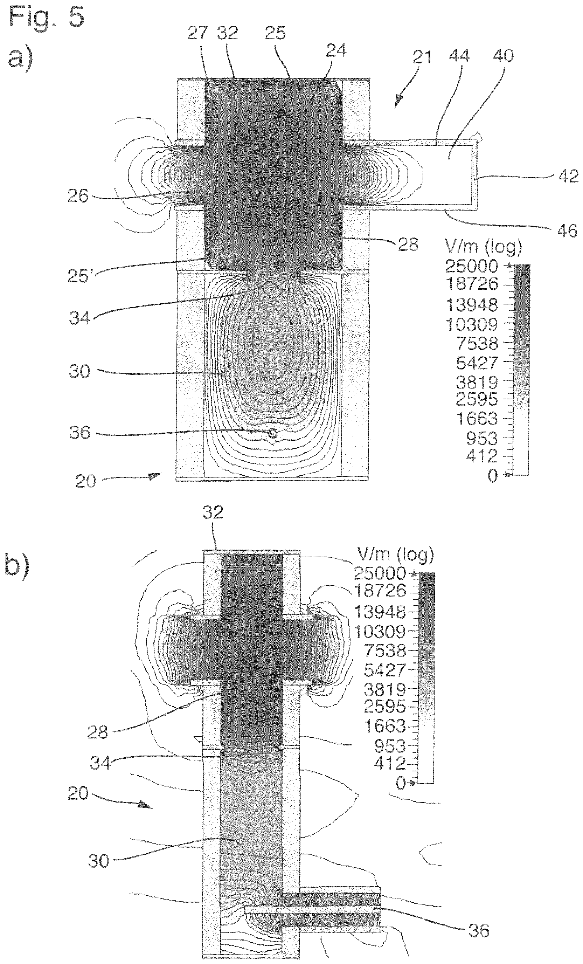

In Fig. 5a), b) sind schematische Schnittdarstellungen durch ein weiteres Ausführungsbeispiel einer erfindungsgemäßen Mikrowellenmessvorrichtung 20 mit Mikrowellenmessfeldern 28 im unbeladenen Zustand gezeigt. In diesem Fall ist die Antenne 36 quer zur Längserstreckung des Resonatorhohlraums 24 des Reflexionsresonators 21 angeordnet. In Fig. 5a) sind auch die für die Mikrowellen durchlässigen Schutzblenden 26, 27 erkennbar. Die höchste Feldstärke wird zentral im Reflexionsresonator 21 bzw. dem Resonatorhohlraum 24 erzielt. Durch die Konstruktion des Durchtrittskanals 40 mit seinen Wandungen und dem überragenden Teil ergibt sich ein sehr geringer Austritt an Mikrowellenleistung in die äußere Umgebung.

Der Mikrowelleneinkopplungshohlraum 30 ist in diesem Ausführungsbeispiel ähnlich längserstreckt wie der Resonatorhohlraum 24.

Der Reflexionsresonator 21 aus Fig. 5 weist ebenso wie die Reflexionsresonatoren der Fig. 3 und 4 im unbeladenen Zustand eine sehr hohe Güte auf.

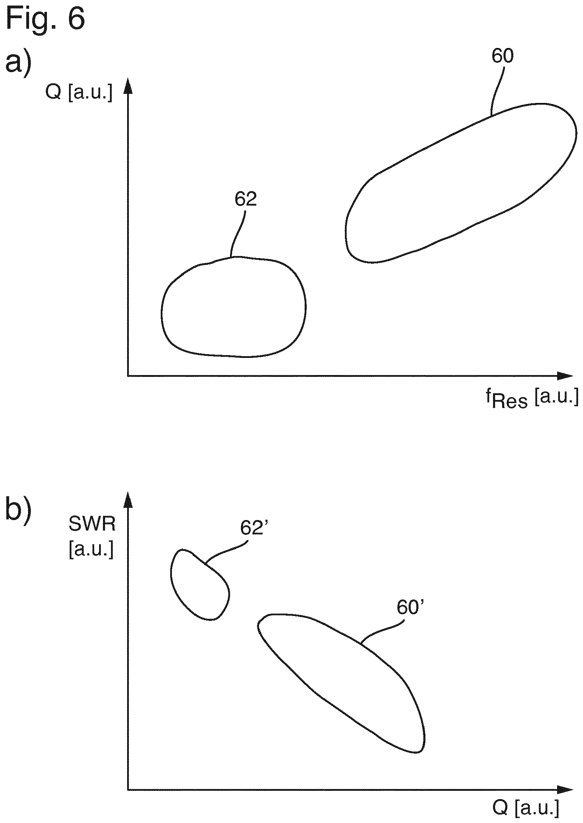

In Fig. 6a) und 6b) sind Beispiele von Analysebereichen bzw. Messwertbereichen in zwei verschiedenen zweidimensionalen Parameterräumen dargestellt. Hier kommen zur Auswertung die Parameter Reflexionsfaktor bzw. SWR ("Standing Wave Ratio", "Stehwellenverhältnis"), die Resonanzfrequenz f_{Res} und die Güte Q. Die Achsenmaße sind jeweils als willkürliche Einheiten ("arbitrary units", "a.u.") gekennzeichnet. Die Resonanzfrequenz der Mikrowelle liegt beispielsweise im Bereich zwischen 2 und 20 GHz und kann je nach Auslegung des Resonatorraums angepasst werden.

Fig. 6a) zeigt auf der y-Achse die Güte (einheitenlos) und auf der x-Achse die Resonanzfrequenz. Es werden zwei Populationen unterschieden. Messwerte von normgerechten Zigarettenköpfen konzentrieren sich in einem recht kleinen Phasenraum, der als Messwertbereich 62 gekennzeichnet ist. Aufgrund der hohen Masse an Tabak sind sowohl die Resonatorgüte als auch die Resonanzfrequenz gegenüber einem unbeladenen Resonator vergleichsweise stark verringert. Zigaretten 5 mit unzureichender Zigarettenkopfdichte als Merkmal der Zigarettenkopfqualität haben weniger Tabak, was zu einer geringeren Verringerung der Resonatorgüte Q und der Resonanzfrequenz führt. Messwerte von solchen Zigaretten 5 befinden sich in einem Messwertbereich 60.

In Fig. 6b) ist auf der y-Achse das Stehwellenverhältniss (SWR, einheitenlos) und auf der x-Achse wiederum die Güte Q (ebenfalls einheitenlos) dargestellt. Hier reihen sie sich beinahe linear auf. Die Messwerte von Zigaretten mit spezifikationskonformen Zigarettenkopfdichten konzentrieren sich in einem Messwertbereich 62'. Die Messwerte der Zigaretten mit zu geringer Zigarettenkopfdichte haben eine höhere Güte und ein geringeres Stehwellenverhältnis und konzentrieren sich im Messwertbereich 60'.

Die Messwertebereiche 60 und 62 bzw. 60' und 62' sind bereits gut voneinander getrennt. Die Kombination beider Kriterien erlaubt eine sehr gute Unterscheidung spezifikationskonformer und spezifikationswidriger Zigaretten, also in dem Fall, wenn alle drei dargestellten Variablen miteinander kombiniert werden und die Messwertbereiche dreidimensional definiert werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 5: Zigarette
- 6: Filter
- 7: Tabakstock
- 8: Zigarettenkopffüllung
- 10: Förderweg
- 15: Saugbandförderer
- 16: aufgeschauerte Tabakschicht
- 17: Überschuss für Zigarettenkopf
- 20: Mikrowellenmessvorrichtung
- 21: Reflexionsresonator
- 22: Gehäuse
- 24: Resonatorhohlraum
- 25, 25', 25": Resonatorhohlraumabschnitt
- 26, 27: Schutzblende
- 28: Mikrowellenmessfeld
- 30: Mikrowelleneinkopplungshohlraum
- 31: Reflexionskammer
- 32: Reflexionsfläche
- 34: Blende
- 36: Antenne
- 40: Durchtrittskanal
- 42: Abschlusswand
- 44: erste Wandung
- 46: zweite Wandung
- 60, 60': Messwertbereich mit spezifikationswidrigen Werten
- 62, 62': Messwertbereich mit spezifikationskonformen Werten

## Patentansprüche

1. Anordnung zum Überprüfen einer Zigarettenkopfqualität an queraxial geförderten Zigaretten mit wenigstens einer Fördervorrichtung zum queraxialen Fördern von Zigaretten (5) entlang eines Förderwegs (10), umfassend wenigstens eine Mikrowellenmessvorrichtung (20), die wenigstens einen Mikrowellenresonator umfasst, der als Reflexionsresonator (21) mit einem längserstreckten Resonatorhohlraum (24), insbesondere mit rechteckigem Querschnitt, ausgebildet ist, der quer zu seiner Längserstreckung von einem Durchtrittskanal (40) durchsetzt ist, durch den der Förderweg (10) verläuft, wobei der Reflexionsresonator (21) an in Bezug auf den Durchtrittskanal (40) zueinander gegenüberliegenden Seiten einerseits eine Mikrowelleneinkopplung aufweist und andererseits von einer Reflexionsfläche (32) begrenzt ist, die parallel zum Durchtrittskanal (40) angeordnet ist.

2. Anordnung nach Anspruch 1, **dadurch gekennzeichnet, dass** Teile des Resonatorhohlraums (24), die nicht vom Durchtrittskanal (40) durchsetzt sind, vom Durchtrittskanal (40) mittels für Mikrowellen durchlässige Schutzblenden (26, 27) abgetrennt sind.

3. Anordnung nach Anspruch 1 oder 2, **dadurch gekennzeichnet, dass** der Durchtrittskanal (40) als Gabel oder im Querschnitt "U"-förmig ausgebildet ist und dass Wandungen (44, 46) des Durchtrittskanals (40) in wenigstens einer Richtung über den Resonatorhohlraum (24) hinausragen.

4. Anordnung nach einem der Ansprüche 1 bis 3, **dadurch gekennzeichnet, dass** der Mikrowellenresonator (21) ein Einkopplungselement zwischen der Mikrowelleneinkopplung und/oder einer an die Reflexionsfläche (32) angrenzende Reflexionskammer (31) einerseits und dem Resonatorhohlraum (24) andererseits umfasst, das als Blende (34) ausgebildet ist, die wenigstens eine, insbesondere ovale, runde oder polygonale, Öffnung aufweist.

5. Anordnung nach Anspruch 4, **dadurch gekennzeichnet, dass** die Mikrowelleneinkopplung ein, insbesondere einstellbares, Transformationselement zur transformatorischen Einkopplung von Mikrowellen in den Resonatorhohlraum (24) umfasst, das insbesondere als Stub-Tuner oder als Zweischeibentransformator ausgebildet ist.

6. Anordnung nach einem der Ansprüche 1 bis 5, **dadurch gekennzeichnet, dass** die wenigstens eine Fördervorrichtung mit Mulden zur Aufnahme und queraxialen Förderung von Zigaretten (5) entlang des Förderwegs (10) ausgebildet ist, wobei auf dem Förderweg (10) durch den wenigstens einen Durchtrittskanal (40) durch den wenigstens einen Mikrowellenresonator (21) über die jeweiligen Mulden überstehende Zigarettenköpfe (8) der Zigaretten (5) ein Mikrowellenmessfeld (28) im Mikrowellenresonator (21) durchqueren.

7. Maschine der Tabak verarbeitenden Industrie, insbesondere Zigarettenherstellmaschine, mit wenigstens einer Anordnung nach einem der Ansprüche 1 bis 6, wobei die Anordnung in einem Abschnitt der Maschine angeordnet ist, in der fertige Zigaretten (5) gefördert werden.

8. Maschine nach Anspruch 7, **dadurch gekennzeichnet, dass** stromaufwärts und/oder stromabwärts der Mikrowellenmessvorrichtung ein optischer Sensor zur Lageerkennung der Zigaretten (5) vorgesehen ist und eine Auswertevorrichtung ausgebildet und eingerichtet ist, Messwerte der Mikrowellenmessvorrichtung anhand der erkannten Lage der Zigaretten (5) in ihren Mulden zu korrigieren oder zu bewerten.

9. Verfahren zum Überprüfen einer Zigarettenkopfqualität an entlang eines Förderwegs (10) queraxial geförderten Zigaretten (5) in einer Anordnung nach einem der Ansprüche 1 bis 6, **dadurch gekennzeichnet, dass** die Zigaretten (5) durch den Durchtrittskanal (40) gefördert werden und dabei mit ihren Zigarettenköpfen (8) ein Mikrowellenmessfeld (28) des als Reflexionsresonator ausgebildeten Mikrowellenresonators (21) durchlaufen.

10. Verfahren nach Anspruch 9, **dadurch gekennzeichnet, dass** wenigstens eine, insbesondere wenigstens zwei verschiedene Größen des Mikrowellenmessfelds (28) beim Durchlaufen einer Zigarette (5) erfasst und ausgewertet werden, insbesondere eine Resonanzfrequenz, eine Güte, ein Reflexionsfaktor und/oder ein Stehwellenverhältnis.

11. Verfahren nach Anspruch 10, **dadurch gekennzeichnet, dass** die erfassten Größen des Mikrowellenmessfelds (28) auf eine Zigarettenkopfqualität der Zigaretten (5) hin ausgewertet werden, wobei zweidimensionale oder mehrdimensionale Messwertbereiche (60, 62) definiert sind oder werden, die für spezifikationskonforme oder nicht spezifikationskonforme Zigaretten (5) stehen.

12. Verfahren nach einem der Ansprüche 9 bis 11, **dadurch gekennzeichnet, dass** eine optische Lageerkennung der Zigaretten (5) stromaufwärts und/oder stromabwärts der Mikrowellenmessung durchgeführt wird und die Messwerte der Mikrowellenmessung anhand einer erkannten Lage der Zigaretten (5) in ihren Mulden korrigiert oder bewertet werden.

13. Verfahren nach einem der Ansprüche 9 bis 12, **dadurch gekennzeichnet, dass** Zigaretten (5), deren Messwerte nicht spezifikationskonform sind, von einer weiteren Verarbeitung und/oder Verpackung ausgeschlossen werden.

14. Verwendung einer Mikrowellenmessvorrichtung (20) in einer Anordnung nach einem der Ansprüche 1 bis 6 zum Überprüfen einer Zigarettenkopfqualität an queraxial geförderten Zigaretten (5).
